Europäisches Patentamt

European Patent Office

Office européen des brevets

(19)

(11) Publication number: **0 005 019**
**B1**

(12) **EUROPEAN PATENT SPECIFICATION**

(45) Date of publication of patent specification: **05.10.83**

(51) Int. Cl.³: **B 65 G 13/00**

(21) Application number: **79300575.2**

(22) Date of filing: **06.04.79**

(54) Conveying apparatus.

(30) Priority: **07.04.78 GB 1368378**

(43) Date of publication of application:
**31.10.79 Bulletin 79/22**

(45) Publication of the grant of the patent:
**05.10.83 Bulletin 83/40**

(84) Designated Contracting States:
**BE DE FR GB LU**

(56) References cited:
**US - A - 2 729 321**
**US - A - 3 553 763**

(73) Proprietor: **Lamberton & Company Limited**
**Sunnyside Works**
**Coatbridge Lanarkshire ML5 2DL Scotland (GB)**

(72) Inventor: **Young, Andrew**
**17 Kelso Quadrant**
**Coatbridge Lanarkshire Scotland (GB)**

(74) Representative: **MacDougall, Donald Carmichael et al,**
**Messrs. Cruikshank & Fairweather 19 Royal Exchange Square**
**Glasgow G1 3AE, Scotland (GB)**

Courier Press, Leamington Spa, England

## Conveying apparatus

This invention relates to conveying apparatus having a conveying surface for supporting and conveying articles between work stations.

In the conveyance of heavy articles, such as steel products, between work stations there is a need for particularly robust conveying apparatus which is of relatively simple construction. Traditionally this requirement has been met by the conveying apparatus being in the form of fixed metal rails over the surfaces of which the articles have been pushed or hauled. A particular problem however is the marked tendency for high level noise to be penetrated by the interaction of the articles with the fixed metal rails. Accordingly there is a need for a form of conveying apparatus which is robust, simple in construction and, in use, substantially noise free.

A known form of conveying apparatus is disclosed in U.S. Patent 3,553,763 and is described as being adapted to heavy duty for moving flat bottom baggage or freight containers, boxes or pallets. This apparatus incorporates rotary elements of relatively complicated construction comprising a dome or shell head portion rotatably mounted on a holder which in turn is rotatably mounted on a fixed carrier, the two rotation axes being mutually inclined at about 30 degrees. Both rotation axes are defined by bearings but neither bearing is capable of carrying heavy loading.

Another known form of conveying apparatus is disclosed in U.S. patent 2,729,321. This apparatus also incorporates rotary elements and although of relatively simple construction they are not robust. The elements comprise a wheel-like head rotatably mounted on a spindle the inclination of which can be varied by a lever arrangement in order to move the elements between a position suitable for moving an article and a position for stopping movement of an article on the conveyor surface. The elements are mounted in rows with alternate elements of each row having their spindles inclined by equal and opposite amounts when positioned for moving an article on the conveyor surface.

According to the present invention we provide conveying apparatus having a conveying surface for conveying articles between work stations, comprising a support on which a plurality of elements are individually rotatably mounted, each element being mounted for rotation about an axis which is inclined at an angle to the normal to the conveying surface; said element having an annular supporting surface portion which is radially spaced from said axis and so inclined with respect thereto that the part of the annular supporting surface portion which, depending on the rotational position of the element, is outermost with respect to the conveying surface is parallel thereto and serves to carry the articles, and said element having a stem portion inserted in a respective socket with a bearing allowing the element to rotate about said axis, characterised in that the conveying apparatus is suitable for conveying steel products, the axis of rotation of each element is fixed and the angle of inclination of the axis to the normal to the conveying surface is small, and the bearing is a thrust bearing located at the lower end of the socket to abut the lower end face of the stem portion to support the element axially.

The features of the pre-characterising part of claim 1 are known from the aforementioned US—A—3553763.

It will be evident that the apparatus of the present invention is simple in construction, in use is substantially noise free, and is robust particularly because the thrust bearing is located remotely from the conveyor surface.

Conveniently, part of the thrust bearing is integral with the stem portion of the element. The thrust bearing may include a bearing surface forming part of a sphere. The thrust bearing may include a spherical bearing member. Alternatively, the thrust bearing may include a part-spherical end face on the stem portion.

The stem portion of the elements may each incorporate a circumferentially-extending annular recess adapted to accommodate a locating spigot releasably secured to the support member, to secure the elements to the support member while permitting rotational movement of the elements with respect to the support member. The spigots may be in the form of grub screws with domed ends for engaging in the recesses.

The support member may be orientated to provide a horizontal conveying surface or an inclined conveying surface and the rotatably mounted elements may be arranged in rows or otherwise disposed over the conveying surface.

Embodiments of the present invention will now be described by way of example with reference to the accompanying drawings, in which:

Fig. 1 is an end view of part of a first embodiment according to the present invention;

Fig. 2 is a plan view of a component of Fig. 1;

Fig. 3 illustrates a further component of Fig. 1 in greater detail;

Fig. 4 is a cross section taken in the line 4—4 of Fig. 2;

Fig. 5 is a diagrammatic plan view of the embodiment and illustrating the formation of the conveying surface;

Figs. 6 and 7 are plan and elevational views of a second embodiment; and

Figs. 8, 9, 10 and 11 illustrate modification of details of the embodiments.

The embodiments are primarily intended for conveying metal articles between work stations

**0 005 019**

and in particular form skids which are useful in the handling of steel workpieces such as H, I, T or U sections where there is usually an attendant high level noise accompanying the conveying motion caused by vibration of the relatively thin portions of the sections. One embodiment has been tested to convey H section steel beams of various dimensions in the range 6 × 3 inches (15 × 7.5 cms) to 36 × 12 inches (90 × 30 cms) and a noise level in the region of 80 decibels (acoustic) has resulted. In conventional skids as used in steel mills in Great Britain (which take the form of fixed metal rails) such steel beams would be expected to produce noise levels of the order of 120 decibels (acoustic).

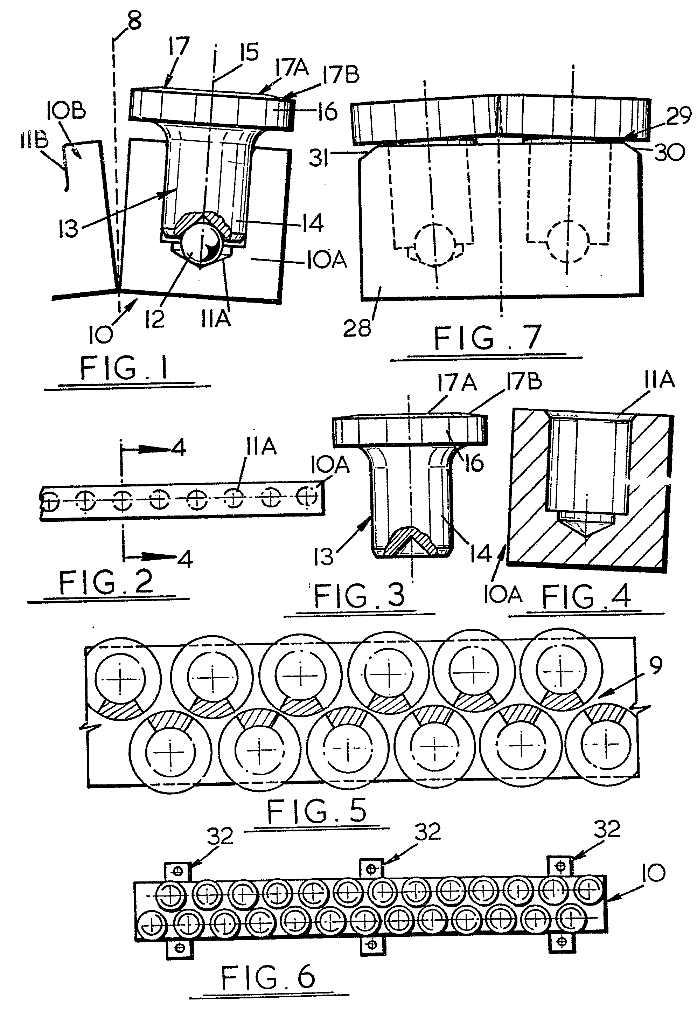

In Fig. 1—5 of the drawings, the apparatus comprises a support member 10 in the form of two elongate blocks 10A, 10B each incorporating a row of blind cylindrical holes 11A, 11B (see Fig. 2) and arranged side-by-side so that the holes 11A are staggered with respect to the holes 11B. The base of the holes is shaped as shown in Fig. 4 to form the seat for a thrust bearing 12 in the form of a spherical ball. A plurality of elements 13 (see Fig. 3) each having a cylindrical stem portion 14 are rotatably mounted on the support member 10 by means of the stem portions 14 entering the respective holes 11A, 11B, the end face of each stem portion 14 being shaped to form a seat on the bearing 12. Each stem portion 14 is a close fit in the hole 11A, 11B, and defines an axis of rotation 15 for the element. Integral with each step portion 14 is a disc portion 16 which presents an upper surface 17 having a central portion 17A extending in a plane which is normal to the axis 15 and an annular peripheral portion 17B which is inclined at a small angle to that normal plane. The small angle may be 2 or 3 degrees but is not greater than 10 degrees. The axis 15 of the stem portion 14 is inclined to the vertical denoted by line 8 of Fig. 1 so that part of the surface portion 17B of each of the elements 13 is tangential to a horizontal plane and these tangential parts form the conveying surface of the apparatus. It will be noted that the portion (17B) forms part of a protruding conical surface, the half angle of the cone being between 80 and about 88 degrees.

In Figs. 1—5 the inclination of the axis 15 is achieved by inclining each of the blocks 10A, 10B, and it will be noted that, when viewed from the end of the blocks 10A, 10B the axis 15 of one row is inclined away from the vertical in the opposite direction to that of the other row. This permits the tangential parts of the surface portions 17B of one row to adjoin the tangential parts of the surface portions 17B of the other row of elements 13 thereby providing a substantially continuous elongate conveying surface (9) for a workpiece as depicted by the hatched portions in Fig. 5. The diameter of the disc portions 16 of the elements 13 may be selected according to the angle of inclination of the axes 15 (or of the surface portions 17B) so that the space between adjacent disc portions 16 in each row and between rows is minimised.

In operation, two support members 10, each as described, are spaced apart by a convenient distance, e.g. two yards (2 meters approximately) and in consequence a skid conveyor is formed. A workpiece, such as a metal section is supported on and moved over the conveying surface (9) formed by the tangential parts of the surface portions 17B in order to convey the workpiece between stations. The action of moving the workpiece, either by hand or by mechanical means causes the elements 13 of each member 10 supporting the workpiece to rotate in turn and convey the workpiece substantially without sliding motion taking place between the workpiece and the conveying surface. This substantially reduces the force required to move the workpiece and reduces the tendency to induce vibration in the workpiece thereby reducing noise. All components of the apparatus may be made of metal thereby making the apparatus robust as is required in the environment of a steel mill or steel yard and the individual components may be replaced without difficulty insofar as the elements 13 may be released from the support members 10 as may the bearing balls 12.

In a modification the two blocks 10A, 10B are spaced apart by a considerable distance, for example, 2 yards (2 meters approx.) in which case the conveying surface so formed has two spaced-apart elongate parallel portions defined by the respective hatched portions of the elements of the rows.

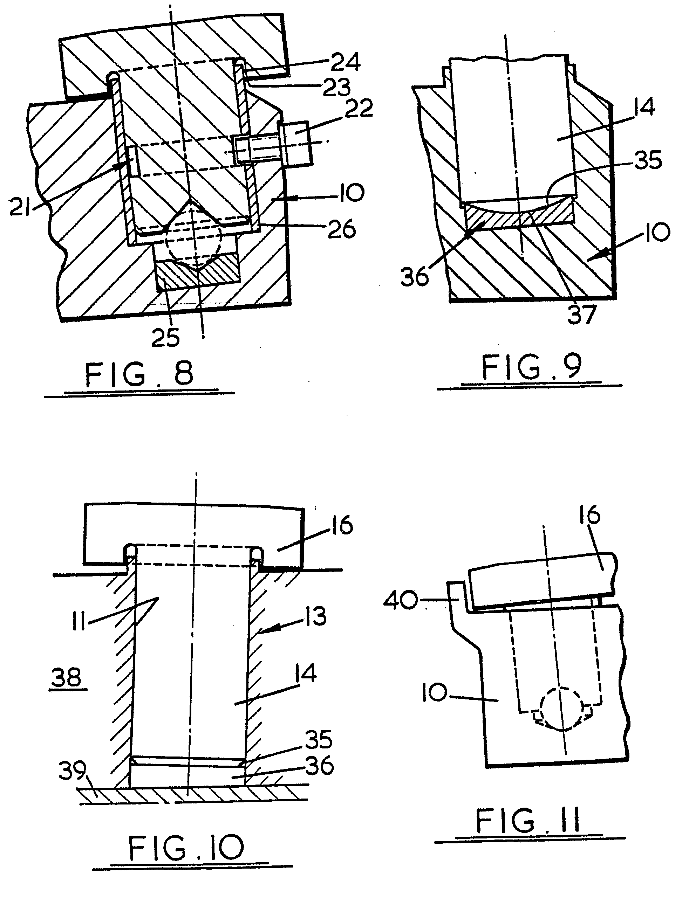

Various modifications may be made to details of the embodiment described with reference to Figs. 1—5. For example as shown in Fig. 8 the stem portions 14 may each incorporate an annular groove 21 for reception of the head of a locating spigot 22 releasably secured to the support member 10. The disc portion 16 may include a skirt portion 23 cooperating with a raised collar portion 24 on the support member 10 in order to prevent foreign matter such as metal scale fouling the rotatable mounting of the stem portion 14 in the hole 11. The collar portion 24 may be integral with the support member 10 or may form part of a sleeve for hole 11. Replaceable seats may be incorporated for the bearing ball 12 either on the stem portion 14 or in the hole 11 (such as that shown at 25) or on both. The hole 11 may accommodate a removable liner 26. The central portion 17A of disc portion 16 may be disked or undercut so that the annular surface portion 17A has a substantially constant radial width irrespective of wear occurring due to continuous use of the apparatus.

Where the workpieces to be conveyed are planar (e.g. plates) the support member may accommodate a plurality of the elements 13 appropriately inclined to provide a two-dimensional conveying surface. In this case it may be appropriate to incline the various axes 15 all in the same direction away from the vertical in which case the elements 13 would all rotate in the same direction. The spacing between adjacent elements 13 could then be quite considerable.

The apparatus may take the form shown in Figs. 6 and 7 where the support 10 is a single component and the holes 11A, 11B are drilled or cast at a non-perpendicular angle to the lower horizontal base surface 28 of the support 10. Each hole includes a liner 29 and the lateral upper edges 30, 31 of the support 10 adjacent the holes 11 are cut away to provide ducts which permit scale and other foreign matter to be shed away from the holes 11. The support 10 includes lateral lugs 32 for securing the support 10 to a base structure (not shown).

The bearing may take the form shown in Fig. 9 where the stem portion 14 has a part-spherical end face 35 and an insert 36 in the hole 11 has a correspondingly shaped upper face 37.

The apparatus may take the form shown in Fig. 10 where the stem portion 14 of the element 13 has a part-spherical end face 35 and the support 10 comprises a first member 38 incorporating a plurality of through holes 11 only one of which is shown, and a second member 39 which acts as a base plate for the member 38. Thus a base for each of the holes is formed by the member 39 and as is shown a removable insert 36 acts as part of the bearing arrangement. The axis of the hole 11 is inclined to the upper surface of the member 38 in order to provide the required orientation of the disc portion 16 of the member 13.

In a further modification each block 10A, 10B has an elongated guard rail 40 extending longitudinally of the block as depicted in Fig. 11. This guard rail 40 serves to protect the disc portion 16 of the elements 13 from damage due to laterally directed flow from a workpiece being fed on to the apparatus.

## Claims

1. Conveying apparatus having a conveying surface for conveying articles between work stations, comprising a support (10) on which a plurality of elements (13) are individually rotatably mounted, each element being mounted for rotation about an axis (15) which is inclined at an angle to the normal (8) to the conveying surface, said element having an annular supporting surface portion (17B) which is radially spaced from said axis and so inclined with respect thereto that the part of the annular supporting surface portion which, depending on the rotational position of the element, is outermost with respect to the conveying surface is parallel thereto and serves to carry the articles, and said element having a stem portion (14) inserted in a respective socket (11A, 11B) with a bearing (12, 35) allowing the element to rotate about said axis, characterised in that the conveying apparatus is suitable for conveying steel products, the axis (15) of rotation of each element (13) is fixed and the angle of inclination of the axis (15) to the normal (8) to the conveying surface is small, and the bearing (12, 35) is a thrust bearing located at the lower end of the socket (11A, 11B) to abut the lower end face of the stem portion (14) to support the element (13) axially.

2. Conveying apparatus as claimed in claim 1, characterised in that said annular supporting surface portion (17B) is formed on an element disc portion (16) which is integral with the element stem portion (14), the surface portion (17B) being part of a protruding cone the axis of which is coincident with the axis of the socket (11A), the cone having a half-angle in the range 80—88 degrees.

3. Conveying apparatus as claimed in claim 1 or claim 2, characterised in that intermediate adjacent sockets (11A) the support (10) is shaped to prevent accumulation of waste materials at the vicinity of the sockets (11A).

4. Conveying apparatus as claimed in any preceding claim, characterised in that the elements (13) are arranged in two rows (10A, 11A) in each of which the elements (13) are equally spaced apart, the elements (13) of one rows (10A, 11A) being staggered with respect to the elements (13) of the other row (10B, 11B), the inclination of the axes (15) of the elements (13) of said one row (10A, 11A) with respect to the normal (8) to the conveying surface (9) being of opposite sense to the inclination of the axes of the elements (13) of said other row (10B, 11B), and the spacing between the two rows (10A, 11A and 10B, 11B) being sufficiently small that a substantially continuous conveying surface (9) is formed by the supporting surface portions (17B) of successive pairs of adjacent elements (13) each such pair comprising an element (13) of each said row (10A, 11A and 10B, 11B).

5. Conveying apparatus as claimed in any preceding claim, characterised in that said conveying surface (9) is one of a pair of such surfaces formed in identical manner and mutually spaced apart by a distance many times greater than the spacing between adjacent elements (13) in a row (10A, 11A).

## Revendications

1. Appareil transporteur, comportant une surface de transport pour le déplacement d'objets entre des postes de travail, qui comprend un support (10) sur lequel une pluralité d'éléments (13) sont montés de façon tournante individuellement, chaque élément étant monté de façon à tourner autour d'une axe (15) qui est incliné d'un certain angle par rapport à la normale (8) à la surface de transport, ledit élément comportant une région annulaire (17B) de surface de support qui est radialement espacée du dit axs et inclinée par rapport à celui-ci, de sorte que la partie de la région annulaire de surface de support qui, en fonction de la position de rotation de l'élément, se trouve le plus à l'extérieur par rapport à la surface de transport, soit parallèle à cette dernière et serve à porter les objets, et ledit élément comportant une queue (14) insérée dans un emboîtement respectif (11A, 11B), un palier (12, 35) permettant à l'élément de tourner autour de cet axe, caractérisé en ce que l'appareil transporteur est approprié au déplacement de produits sidérurgiques, l'axe (15) de rotation de chaque élément (13) est fixe et l'angle d'inclinaison de l'axe (15) par rapport à la normale (8) à la surface de transport est petit, et le palier (12, 35) est un palier de butée placé à l'extrêmité inférieure de l'emboîtement (11A, 11B), en butée avec la face d'extrémité inférieure de la queue (14), pour supporter axialement l'élément (13).

2. Appareil transporteur suivant la revendication 1, caractérisé en ce que la surface de support annulaire (17B) est formée sur une partie en forme de disque (16) de l'élément, qui est solidaire de la queue (14) de l'élément, la région de surface (17B) faisant partie d'un cône en saillie dont l'axe coïncide avec l'axe de l'emboîtement (11A), le cône ayant un demi-angle au sommet compris entre 80 et 88°.

3. Appareil transporteur suivant la revendication 1 ou la revendication 2, caractérisé en ce que, entre des emboîtements adjacents (11A), le support (10) a une configuration qui permet d'éviter l'accumulation de matières étrangères au voisinage des emboîtements (11A).

4. Appareil transporteur suivant l'une quelconque des revendications précédentes, caractérisé en ce que les éléments (13) sont disposés en deux rangées (10A, 11A) dans chacune desquelles les éléments (13) sont également espacés les uns des autres, les éléments (13) d'une rangée (10A, 11A) étant décalés par rapport aux éléments (13) de l'autre rangée (10B, 11B), l'inclinaison des axes (15) des éléments (13) d'une rangée (10A, 11A) par rapport à la normale (8) à la surface de transport (9) étant de sens opposé à l'inclinaison des axes des éléments (13) de l'autre rangée (10B, 11B), et l'espacement entre les deux rangées (10A, 11A, et 10B, 11B) étant suffisamment petit pour qu'une surface de transport (9) sensiblement continue soit constituée par les régions (17B) de surface support de paires successives d'éléments adjacents (13), chacune de ces paires comprenant un élément (13) de chaque rangée (10A, 11A et 10B, 11B).

5. Appareil transporteur suivant l'une quelconque des revendications précédentes, caractérisé en ce que la surface de transport (9) est l'une de deux surfaces formées de manière identique et mutuellement espacées d'une distance plusieurs fois supérieure à la distance entre les éléments adjacents (13) d'une rangée (10A, 11A).

## Patentansprüche

1. Fördervorrichtung mit einer Förderfläche zum Befördern von Werkstücken zwischen Bearbeitungsstationen, mit einem Träger (10), auf welchem eine Vielzahl von Elementen (13) einzeln drehbar befestigt ist, wobei jedes Element (13) drehbar um eine Achse (15) angeordnet ist, die unter einem Winkel zur Senkrechten auf der Förderfläche geneigt ist, das Element einen ringförmigen Trägerflächenabschnitt (17B) aufweist, der in radialem Abstand von der Achse (15) liegt und zu dieser so geneigt ist, daß der Teil des Trägerflächenabschnittes (17B), der in Abhängigkeit von der Drehstellung des Elementes (13) am weitesten außen bezüglich der Förderfläche liegt, zu dieser parallel ist und zum Tragen der Werkstücke dient, und das Element einen Schaftteil (14) aufweist, der in eine entsprechende Lagerbohrung (11A, 11B) mit einem Lager (12, 35) eingefügt ist, welches eine Drehung des Elementes um die Achse (15) erlaubt, dadurch gekennzeichnet, daß die Fördervorrichtung zum Fördern von Stahlwerkstücken geeignet ist, daß die Rotationsachse (15) eines jeden Elementes (13) fixiert ist und der Neigungswinkel der Achse (15) zur Senkrechten auf der Förderfläche klein ist, und dab das Lager (15, 35) ein Axialdrucklager ist, das am unteren Ende der Lagerbohrung (11A, 11B) so angeordnet ist, daß es an der unteren Endfläche des Schaftteils (14) anliegt, und das Element (13) axial abstützt.

2. Fördervorrichtung nach Anspruch 1, dadurch gekennzeichnet, daß der ringförmige Trägerflächenabschnitt (17B) auf einem Scheibenteil (16) des Elements (13) ausgebildet ist, der mit dem Schaftteil (14) einstückig ausgebildet ist, wobei der Trägerflächenabschnitt (17B) eine Teil eines vorstehenden Kegels ist, dessen Achse mit der Achse der Lagerbohrung (15) übereinstimmt und der einen Spitzenhalbwinkel im Bereich von 80—88° hat.

3. Fördervorrichtung nach Anspruch 1 oder 2, dadurch gekennzeichnet, daß der Träger (10) zwischen nebeneinanderliegenden Lagerbohrungen (11A) so geformt ist, daß er ein Ansammeln von Abfallstoffen in der Nähe der Lagerbohrungen (11A) verhindert.

4. Fördervorrichtung nach einem der Ansprüche 1 bis 3, dadurch gekennzeichnet, daß die Elemente (13) in zwei Reihen (10A, 11A) angeordnet sind, in welchen sie jeweils in gleichen Abständen liegen, wobei die Elemente (13) der einen Reihe (10A, 11A) bezüglich der Elemente (13) der anderen Reihe (10B, 11B) versetzt angeordnet sind, wobei die Neigung der Achse (15) der Elemente (13) der einen Reihe (10A, 11A) bezüglich der Normalen der Förderfläche (9) entgegengesetzt zur Neigung der Drehachsen der Elemente (13) der anderen Reihe (10B, 11B) ist, und der Abstand zwischen den zwei Reihen (10A, 11B) und (10B, 11B) klein genug ist, daß eine im wesentlichen durchgehende Förderfläche (9) durch die Trägerflächenabschnitte (17B) von aufeinanderfolgenden Paaren von nebeneinanderliegenden Elementen (13) gebildet, wird, wobei jedes Paar ein Element (13) aus jeder der Reihen (10A, 11A) und (10B, 11B) enthält.

5. Fördervorrichtung nach einem der vorangehenden Ansprüche, dadurch gekennzeichnet, daß die Förderfläche (9) eine von einem Paar von solchen Flächen ist, die auf identische Weise ausgebildet und voneinander beabstandet sind, wobei der Abstand zwischen den Förderflächen (9) erheblich größer ist, als der Abstand zwischen nebeneinanderliegenden Elementen (13) in einer Reihe (10A, 11A).

FIG. 1

FIG. 2

FIG. 3

FIG. 4

FIG. 5

FIG. 6

FIG. 7

FIG. 8

FIG. 9

FIG. 10

FIG. 11

2